# EUROPÄISCHE PATENTSCHRIFT

(11) **EP 0 855 295 B1**
(45) Veröffentlichungstag und Bekanntmachung des Hinweises auf die Patenterteilung: **11.07.2001**
(21) Anmeldenummer: 98100826.1
(22) Anmeldetag: 20.01.1998
(51) Int. Cl.: B60D 1/46

(54) **Anhängevorrichtung**
Towing device
Dispositif d'attelage

(30) Priorität: 25.01.1997 DE 19702700
(43) Veröffentlichungstag der Anmeldung: 29.07.1998
(73) Patentinhaber: DEERE & COMPANY, Moline, Illinois 61265-8098 (US)
(72) Erfinder: Halabiya, Sabah, 68794 Rheinhausen (DE); Dimitrijevic, Milan, 68159 Mannheim (DE)
(74) Vertreter: Feldmann, Bernhard

(56) Entgegenhaltungen:
- EP-A- 0 281 639
- EP-A- 0 294 509
- US-A- 1 735 719
- US-A- 5 224 728

## Beschreibung

Die Erfindung bezieht sich auf eine höhenverstellbare Anhängevorrichtung für ein landwirtschaftliches oder industrielles Fahrzeug, vorzugsweise für einen Ackerschlepper, mit mindestens einem am Fahrzeug angebrachten Führungselement, das eine vertikal verstellbare und arretierbare Halterung führt.

Die DE-OS-29 10 164 zeigt eine Anhängerkupplung für landwirtschaftliche Schlepper nach dem Oberbegriff des Anspruchs 1. Diese besteht aus einem Kupplungsmaul und einer mit diesem fest verbundenen Tragplatte, die zwischen zwei schlepperfesten Lochschienen vertikal verstellbar geführt und in verschiedenen Positionen mittels die Lochschienen und die Tragplatte durchdringender Bolzen arretiert ist. Wegen des relativ großen Gewichtes der Anhängekupplung wird die Anhängerkupplung durch zwei Druckfedern mit einer besonderen Federkennlinie unterstützt.

Die DE-A1-38 16 359 zeigt eine höhenverstellbare Anhängerkupplung an landwirtschaftlichen Fahrzeugen, die mittels eines aus zwei Kolben-Zylinder-Anordnungen bestehenden Kraftantriebs stufenlos verstellbar ist. Zum Verstellen der Anhängekupplung muß die Kolben-Zylinder-Anordnung unter Arbeitsdruck stehen, wobei üblicherweise der Antrieb des Fahrzeugs in Betrieb sein muß.

Die europäische Patentanmeldung EP-A1-0 294 509 zeigt ebenfalls eine höhenverstellbare Anhängerkupplung für landwirtschaftliche Fahrzeuge mit einem mittels eines Spindel-Muttertriebs höhenverstellbar geführten Kupplungsträger. Diese Ausführung ist aufwendig in der Herstellung und erfordert eine häufige Wartung des Spindel-Muttertriebs.

Die mit der Erfindung zu lösende Aufgabe wird darin gesehen, eine robuste Vorrichtung zur vertikalen Verstellung einer Anhängevorrichtung vorzuschlagen, deren Verstellung mit geringem Kraftaufwand, auch bei abgeschaltetem Fahrzeugantrieb, möglich ist, und dabei kostengünstig, da aus handelsüblichen Teilen bestehend, herstellbar ist.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße höhenverstellbare Anhängevorrichtung enthält mindestens ein am Fahrzeug angebrachtes Führungselement, das eine vertikal verstellbare und arretierbare Halterung führt. Es ist ein bandförmiges Element vorgesehen, das wenigstens mit seinem oberen und seinem unteren Bereich an dem Fahrzeug bzw. dem Führungselement festlegbar ist. Der mittlere Bereich des bandförmigen Elements steht mit wenigstens einer an der Halterung drehbar angeordneten Rolle in abrollbarem und reib- oder formschlüssigem Eingriff. Ferner ist ein Verdrehantrieb zum Verdrehen wenigstens einer mit dem bandförmigen Element in Eingriff stehenden Rolle vorgesehen.

Die erfindungsgemäße Anhängevorrichtung läßt eine Höhenverstellung ohne großen Kraftaufwand zu. Ein Fremdantrieb ist dabei nicht erforderlich, kann jedoch wahlweise verwendet werden. Die Anhängevorrichtung ist robust und störunanfällig. Sie läßt sich kostengünstig unter Verwendung handelsüblicher Bauteile herstellen.

Gemäß einer besonders bevorzugten Ausgestaltung der Erfindung ist wenigstens der mittlere Bereich des bandförmigen Elements flexibel ausgebildet und umschlingt die Umfangsfläche wenigstens einer Rolle wenigstens teilweise. Dies ermöglicht die Übertragung relativ großer Kräfte mit einfachen Mitteln.

Eine sichere Führung des bandförmigen Elements ergibt sich, wenn zwei Rollen vorgesehen sind, die von dem bandförmigen Element gegensinnig umschlungen werden. Um einen guten Lauf des bandförmigen Elements zu ermöglichen, ohne daß dieses zum Verklemmen oder Verkanten neigt, sollten die Rollen etwa in einer Ebene liegen und etwa parallele Drehachsen aufweisen.

Befindet sich die näher bei dem oberen Bereich des bandförmigen Elements liegende Rolle in einer tieferen Position auf der Halterung als die näher bei dem unteren Bereich des bandförmigen Elements liegende Rolle, ergibt sich zwischen der jeweiligen Rolle und dem bandförmigen Element ein relativ großer Umschlingungsbereich, in dem Rolle und bandförmiges Element in Eingriff stehen können. Dies ermöglicht einen intensiveren Form- oder Kraftschluß zwischen Rollen und bandförmigem Element.

Ein besonders sicherer Eingriff zwischen den Rollen und dem bandförmigen Element ergibt sich, wenn das bandförmige Element in Form einer Kette ausgeführt ist. Auf mindestens einer der Rollen sind dann Zähne bzw. Vorsprünge vorzusehen, die in oder zwischen die Kettenglieder eingreifen können.

Beinhaltet das Führungselement zwei Führungsschienen, die senkrecht und zueinander parallel angeordnet sind, ermöglicht dies ein verkantungsfreies, vertikales Verschieben einer zwischen diesen geführten Halterung. Um eine relative Bewegung der Halterung gegenüber dem Führungselement zu erzielen, wird das bandförmige Element mit seinen jeweiligen Enden in einem oberen bzw. einem unteren Bereich jeweils einer der Führungsschienen festgelegt.

Zur Befestigung des bandförmige Elements an den Führungsschienen ist es zweckmäßig eines seiner Enden ösenförmig auszubilden. Dies erlaubt ein leichtes Ab- und Aufsetzen des Endes auf die jeweilige Führungsschiene.

Die erfindungsgemäße Anhängevorrichtung erlaubt grundsätzlich eine nahezu stufenlose Höheneinstellung der Halterung. Für eine Festlegung der Halterung bezogen auf das Führungselement in verschiedenen Höhenpositionen kann eine Verriegelungsvorrichtung vorgesehen werden. Es ist zweckmäßig, wenn diese Verriegelungs-vorrichtung ein verschiebbarer Riegel ist, der in zwei Endpositionen bringbar ist. In seiner ersten, ausgefahrenen Position greift er zwischen die Glieder der Kette ein und legt diese somit fest. In seiner zweiten, eingefahrenen Position steht er mit den Gliedern der Kette nicht in Eingriff und erlaubt so eine Bewegung der Halterung bezogen auf die Kette.

Die Höhenverstellung der Anhängevorrichtung wird wesentlich erleichtert, wenn auf wenigstens eine der Rollen eine Kurbel aufgesetzt werden kann. Diese Kurbel kann manuell oder mit Hilfe eines Motors angetrieben werden.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine Aufsicht einer erfindungsgemäßen Anhängevorrichtung und
- Fig. 2: eine Seitenansicht derselben Anhängevorrichtung vom Fahrzeug aus nach hinten gesehen.

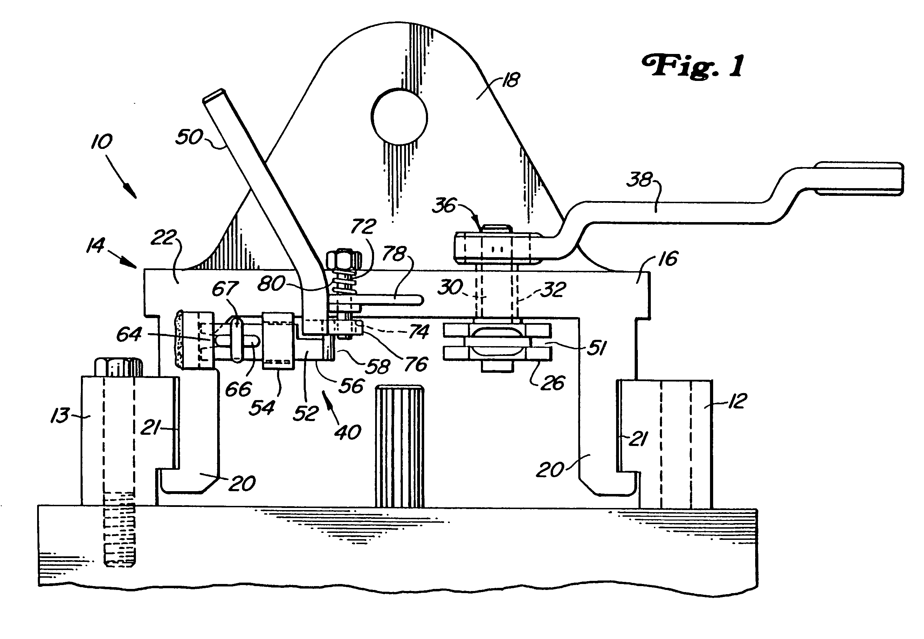

Fig. 1 zeigt eine Anhängevorrichtung 10 zum Anbau von Geräten und dergleichen an ein landwirtschaftliches Fahrzeug, vorzugsweise einen Traktor. An der Rückseite des nicht näher dargestellten Traktors sind zwei Führungsschienen 12, 13 verschraubt. Zwischen diesen Führungsschienen 12, 13 ist eine Halterung 14 vertikal verschiebbar geführt.

Die Halterung 14 besteht aus einer U-förmigen Brücke 16, an der ein Anhängemaul 18 oder ein anderes Element zum Anhängen eines Arbeitsgerätes oder Anhängers angebracht ist.

Die U-förmige Brücke 16 besteht aus zwei Schenkeln 20, die in herkömmlicher Weise vertikale Vertiefungen 21 enthalten, in die die Führungsschienen 12, 13 eingreifen. Zwischen den Schenkeln 20 erstreckt sich eine Platte 22 an deren dem Traktor zugewandten Seite zwei 6-kantförmige Rollen 26, 28 drehbar angebracht sind. Anstelle der 6-kantförmigen Rollen 26, 28 ist auch der Einsatz von Rollen mit mehr oder weniger Seitenflächen denkbar. Die erste Rolle 26 ist auf einem Bolzen 30 drehfest gelagert, der sich durch eine Bohrung 32 in der Platte 22 erstreckt. Auf der dem Traktor 10 abgewandten Seite der Platte 22 ist auf dem Bolzen 30 eine Mutter 36 unverdrehbar angebracht. Auf die Mutter 36 kann ein Ringschlüssel 38 aufgesetzt werden, mit dem sich die erste Rolle 26 verdrehen läßt. Die zweite Rolle 28 ist in herkömmlicher Art über einen weiteren Bolzen drehbar an der Platte 22 befestigt.

An der Brücke 16 ist ferner eine Verriegelungsvorrichtung 40 vorgesehen, auf die später noch genauer eingegangen wird.

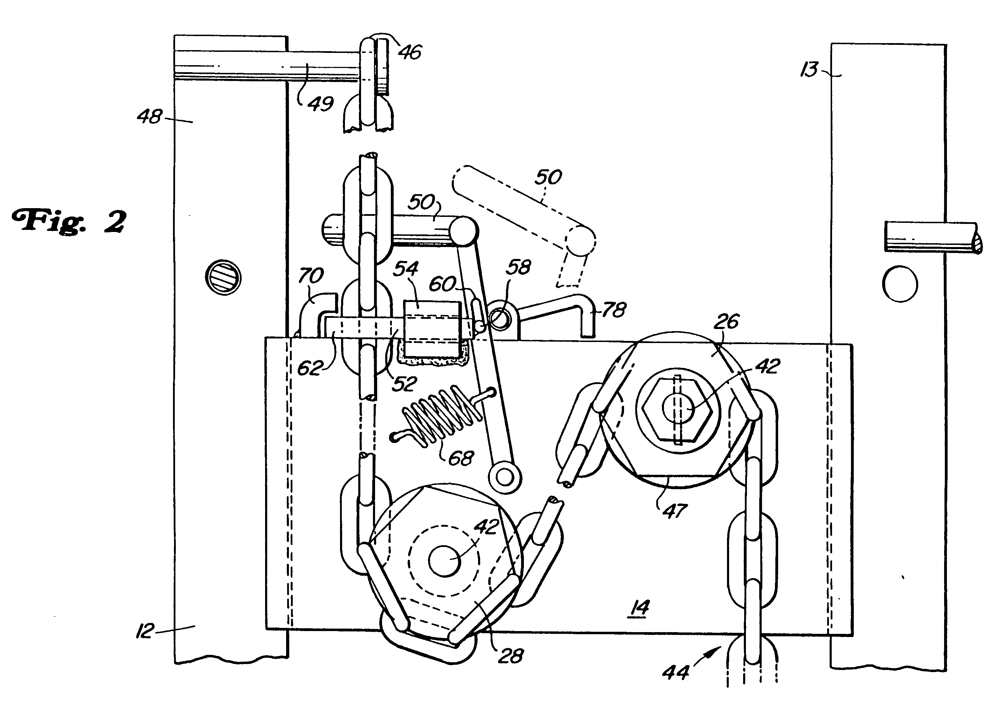

Fig. 2 zeigt die erfindungsgemäße Anhängevorrichtung 10 von der dem Traktor zugewandten Seite aus gesehen. Die beiden 6-kantförmigen Rollen 26, 28 sind in horizontaler wie auch vertikaler Richtung versetzt angebracht. Der Abstand zwischen den Mittelpunkten 42 der beiden Rollen 26, 28 entspricht in der Horizontalen etwa dem 1,5-fachen des Rollendurchmessers und in der Vertikalen etwa dem Rollendurchmesser. Eine in Fig. 1 der besseren Übersichtlichkeit wegen nicht gezeigte Kette 44 umschlingt die beiden Rollen 26, 28. Die Kette 44 ist mit einem ihrer beiden Enden 46 an einem oberen Bereich 48 der ersten Führungsschiene 12 und mit ihrem anderen Ende an einem unteren Bereich der zweiten Führungsschiene 13 befestigt. Das eine Ende 46 der Kette 44 ist ösenförmig ausgeführt. Mittels eines Steckbolzens 49 ist dieses Ende 46 lösbar mit der ersten Schiene 12 verbunden. Die Kette 44 verläuft ausgehend von ihrem unteren Ende über die Oberseite der ersten Rolle 26 und umschlingt die zweite Rolle 28 an deren Unterseite.

Die Kette 44 besteht aus aufeinander folgenden annähernd ovalen Gliedern 66, 67, die ineinander eingreifen und die jeweils um 90 Grad versetzt angeordnet sind.

Die Rollen 26, 28 besitzen auf ihrem Umfang einen umlaufenden Schlitz 51. Dieser dient zur Aufnahme der sich bezgl. der Rollen 26, 28 radial erstreckenden Glieder 66 der Kette 44 und damit auch zur Führung der Kette 44. Die zu diesen versetzt angeordneten übrigen Glieder 67 liegen auf den Seitenflächen 47 der Rollen 26, 28 auf und dienen der Kräftübertragung zwischen Rollen 26, 28 und Kette 44.

Etwa im Zentrum der Platte 22 ist ein Griff 50 drehbar befestigt. Oberhalb der Platte 22 ist ein Riegel 52 vorgesehen, der in einer, mit der Platte 22 nicht lösbar verbundenen, nach unten offenen U-förmigen Halterung 54 verschiebbar geführt ist. Mit einem an seinem ersten Ende 56 angebrachten Bolzen 58 greift der Riegel 52 in ein Langloch 60 im Griff 50 ein. Damit kann der Riegel 52 mittels des Griffs 50 in horizontaler Richtung hin- und her bewegt werden. Der Riegel 52 weist an seinem der Kette 46 zugewandten zweiten Ende 62 einen vertikalen Schlitz 64 auf, der sich in Richtung seiner Längsmittelachse etwa bis zur Mitte des Riegels 52 erstreckt und so ausgebildet ist, daß er ein Glied 66 der Kette 44, daß sich in Richtung seiner Längsmittelachse erstreckt, aufnehmen kann.

Der Griff 50 wird mittels einer einenends am Griff 50 und andernends an der Platte 22 befestigten Feder 68 in Richtung der Kette 44 belastet. Das hat zur Folge, daß der Riegel 52 ein zuvor beschriebenes Kettenglied 66 umschließt und mit seinem zweiten Ende 62 in eine, an der Platte 22 befestigte, hakenförmige Halterung 70 eingreift. In dieser Stellung ist eine Bewegung der Brücke 16 bezogen auf die Führungsschienen 12, 13 nicht möglich.

Wird der Griff 50 gegen die Wirkung der Feder 68 von der Kette 44 wegbewegt, gibt der Schlitz 64 des Riegels 52 die Kette 44 frei. Mittels des aufgesetzten Ringschlüssels 38 kann die obere Rolle 26 mit einem geringen Kraftaufwand verdreht werden. Eine zusätzliche Unterstützung der Halterung 14 erfolgt mittels des Griffs 50.

An der Platte 16 ist ein Bolzen 72 horizontal verschiebbar angebracht. Wenn sich der Riegel 52 in einer Stellung befindet, in der eine Bewegung der Brücke 16 nicht möglich ist, greift der Bolzen 72 in eine Bohrung 74 in einer an dem Griff 50 fest angebrachten Platte 76 ein. Der Bolzen 72 ist mittels eines Handgriffs 78 gegen die Wirkung einer Feder 80 verschiebbar und kann so in eine Stellung gebracht werden, in der der Bolzen 72 nicht in die Bohrung 74 eingreift und in der eine Bewegung des Riegels 52 möglich ist. Durch die Federbelastung des Bolzens 72 greift dieser selbsttätig in die Bohrung 74 ein, sobald der Handgriff 78 nicht festgehalten wird. Diese Einrichtung stellt sicher, daß ein Lösen der Brücke 16 nicht unbeabsichtigt durchgeführt wird.

Der Riegel 52 muß während des Verstellvorgangs aktiv von der Kette 44 weggedrückt werden, da er sich sonst durch die Feder 68 auf die Kette 44 zubewegt und in eines der Kettenglieder 66 eingreift. Ein Herunterfallen der Brücke 16 damit wird verhindert.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Höhenverstellbare Anhängevorrichtung für ein landwirtschaftliches oder industrielles Fahrzeug, vorzugsweise für einen Ackerschlepper, mit mindestens einem am Fahrzeug angebrachten Führungselement (12, 13), das eine vertikal verstellbare und arretierbare Halterung (14) führt, dadurch gekennzeichnet, daß ein bandförmiges Element (44) wenigstens mit einem oberen und einem unteren Bereich an dem Fahrzeug bzw. dem Führungselement (12, 13) festlegbar ist und mit einem mittleren Bereich mit wenigstens einer an der Halterung (14) drehbar angeordneten Rolle (26, 28) in abrollbarem und reib- oder formschlüssigem Eingriff steht und daß ein Verdrehantrieb (38) zum Verdrehen der wenigstens einen mit dem bandförmigen Element (44) in Eingriff stehenden Rolle (26) vorgesehen ist.

2. Anhängevorrichtung nach Anspruch 1, dadurch gekennzeichnet, daß wenigstens der mittlere Bereich des bandförmigen Elements (44) flexibel ausgebildet ist und eine Umfangsfläche wenigstens einer Rolle (26, 28) wenigstens teilweise umschlingt.

3. Anhängevorrichtung nach Anspruch 2, dadurch gekennzeichnet, daß wenigstens zwei in einer Ebene liegende Rollen (26, 28) mit parallelen Drehachsen auf der Halterung (14) angeordnet sind und daß das bandförmige Element (44) die beiden Rollen (26, 28) gegensinnig umschlingt.

4. Anhängevorrichtung nach Anspruch 3, dadurch gekennzeichnet, daß wenigstens zwei Rollen (26, 28) auf der Halterung (14) vorgesehen sind, und daß die näher zum oberen Bereich des bandförmigen Elements (44) liegende Rolle (28) eine tiefere Position auf der Halterung einnimmt als die näher zum unteren Bereich des bandförmigen Elements (44) liegende Rolle (26).

5. Anhängevorrichtung nach einem der Ansprüche 2 bis 4, dadurch gekennzeichnet, daß das bandförmige Element (44) eine Kette ist, in oder zwischen deren Glieder Zähne oder Vorsprünge der wenigstens einen Rolle (26, 28) eingreifen.

6. Anhängevorrichtung nach einem der Ansprüche 2 bis 5, dadurch gekennzeichnet, daß das Führungselement zwei senkrechte parallele Führungsschienen (12, 13) aufweist, in denen die Halterung (14) vertikal verschiebbar geführt ist, und daß ein Ende (46) des bandförmigen Elements (44) an einem oberen Bereich (48) des ersten Führungselements (12) und das andere Ende des bandförmigen Elements (44) an einem unteren Bereich des zweiten Führungselements (13) befestigbar ist.

7. Anhängevorrichtung nach einem der Ansprüche 2 bis 6, dadurch gekennzeichnet, daß wenigstens ein Ende (46) des bandförmigen Elements (44) ösenförmig ausgebildet ist und in einen an dem Führungselement (12) befestigten Vorsprung (49), vorzugsweise Bolzen, einhängbar ist.

8. Anhängevorrichtung nach einem der Ansprüche 1 bis 7, dadurch gekennzeichnet, daß eine Verriegelungsvorrichtung vorgesehen ist, durch die sich eine Relativbewegung zwischen Halterung (14) und Führungselement (12, 13) begrenzen oder verhindern läßt.

9. Anhängevorrichtung nach Anspruch 8, dadurch gekennzeichnet, daß an der Halterung (14) ein zwischen zwei Endpositionen verschiebbarer Riegel (52) vorgesehen ist, der in seiner ersten, ausgefahrenen Position in oder zwischen einzelne Glieder (66) der Kette (44) eingreift und in seiner zweiten, eingefahrenen Position mit den Gliedern (66) der Kette (44) nicht in Eingriff steht.

10. Anhängevorrichtung nach einem der Ansprüche 1 bis 9, dadurch gekennzeichnet, daß an an der wenigstens einen Rolle (26) Mittel vorgesehen sind, auf die ein Kurbelelement (38) aufsetzbar ist, daß manuell oder motorisch antreibbar ist.

## Claims

1. A height-adjustable hitch device for an agricultural or industrial vehicle, preferably for an agricultural tractor, with at least one guide element (12, 13) fitted on the vehicle to guide a vertically adjustable retainer (14), which can be fixed in position, characterized in that an element (44) of strip form can be fixed to the vehicle or the guide element (12, 13) at least at an upper and a lower region and has a middle region in rolling and frictional or positive drive engagement with at least one roller (26, 28) arranged rotatably on the holder (14), and in that a turning drive means (38) is provided for turning the at least one roller (26) in engagement with the element (44) of strip form.

2. A hitch device according to claim 1, characterized in that at least the middle region of the element (44) of strip form is flexible and at least partially wraps a peripheral surface of at least one roller (26, 28).

3. A hitch device according to claim 2, characterized in that at least two rollers (26, 28) lying in a plane with parallel axes of rotation are arranged on the retainer (14) and in that the element (44) of strip form wraps round the two rollers (26, 28) in opposite senses.

4. A hitch device according to claim 3, characterized in that at least two rollers (26, 28) are provided on the retainer (14) and in that the roller (28) lying nearer to the upper region of the element (44) of strip form assumes a deeper position on the retainer than the roller (26) lying nearer to the lower region of the element (44) of strip form.

5. A hitch device according to any of claims 2 to 4, characterized in that the element (44) of strip form is a chain, in or between whose links teeth or projections of the at least one roller (26, 28) engage.

6. A hitch device according to any of claims 2 to 5, characterized in that the guide element comprises two vertical, parallel guide rails (12, 13), in which the retainer (14) is guided to slide vertically, and in that one end (46) of the element (44) of strip form can be fixed to an upper region (48) of the first guide element (12) and the other end of the element (44) of strip form can be fixed to a lower region of the second guide element (13).

7. A hitch device according to any of claims 2 to 6, characterized in that at least one end (46) of the element (44) of strip form has the form of an eye and can be suspended on a projection (49), preferably a pin, fixed on the guide element (12).

8. A hitch device according to any of claims 1 to 7, characterized in that a locking device is provided, through which relative movement between the retainer (14) and the guide element (12, 13) can be restricted or prevented.

9. A hitch device according to claim 8, characterized in that a bolt (52) which can be shifted between two end positions is provided on the retainer (14) and engages in or between individual links (66) of the chain (44) in its first, extended position and does not engage the links (66) of the chain (44) in its second, retracted position.

10. A hitch device according to any of claims 1 to 9, characterized in that means are provided on the at least one roller (26) on which can be fitted a crank element (38) which can be driven manually or by a motor.

## Revendications

1. Dispositif d'attelage réglable en hauteur pour un véhicule agricole ou industriel, de préférence un tracteur, comportant au moins un élément de guidage (12, 13), qui est monté sur le véhicule et guide un dispositif de retenue (14) qui est réglable verticalement et peut être bloqué, caractérisé en ce qu'un élément en forme de bande (44) comportant au moins une partie supérieure et une partie inférieure peut être fixé au véhicule ou à l'élément de guidage (12, 13) et, par une partie médiane, est en prise, de manière à pouvoir rouler selon une liaison de frottement ou une liaison par formes complémentaires, avec au moins un galet (26, 28) disposé de manière à pouvoir tourner sur le dispositif de retenue (14), et qu'il est prévu un dispositif d'entraînement en rotation (38) servant à faire tourner le au moins un galet (26) qui engrène avec l'élément en forme de bande (44).

2. Dispositif d'attelage selon la revendication 1, caractérisé en ce qu'au moins la partie médiane de l'élément en forme de bande (44) est agencé de manière flexible et s'enroule au moins partiellement autour d'une surface circonférentielle d'au moins un galet (26, 28).

3. Dispositif d'attelage selon la revendication 2, caractérisé en ce qu'au moins deux galets (26, 28) situés dans un plan et possédant des axes de rotation parallèles sont disposés sur le dispositif de retenue (14) et que l'élément en forme de bande (44) s'enroule autour des deux galets (26, 28) en des sens opposés.

4. Dispositif d'attelage selon la revendication 3, caractérisé en ce qu'au moins deux galets (26, 28) sont prévus sur le dispositif de retenue (14) et que le galet (28), qui est le plus près de la partie supérieure de l'élément en forme de bande (44), occupe dans le dispositif de retenue une position plus basse que le galet (26) qui est le plus près de la partie inférieure de l'élément en forme de bande (44).

5. Dispositif d'attelage selon l'une des revendications 2 à 4, caractérisé en ce que l'élément en forme de bande (44) est une chaîne, dans ou entre les maillons de laquelle s'engage des dents ou des parties saillantes du au moins un galet (26, 28).

6. Dispositif d'attelage selon l'une des revendications 2 à 5, caractérisé en ce que l'élément de guidage comporte deux rails de guidage verticaux parallèles (12, 13), dans lesquels le dispositif de retenue (14) est guidé de manière à être déplaçable verticalement, et qu'une extrémité (46) de l'élément en forme de bande (44) peut être fixée à une partie supérieure (48) du premier élément de guidage (12) et que l'autre extrémité de l'élément en forme de bande (44) peut être fixée à une extrémité inférieure du second élément de guidage (13).

7. Dispositif d'attelage selon l'une des revendications 2 à 6, caractérisé en ce qu'au moins une extrémité (46) de l'élément en forme de bande (44) est agencée en forme d'oeillet et peut être accrochée à un appendice saillant (49) fixé sur l'élément de guidage (12), de préférence un axe.

8. Dispositif d'attelage selon l'une des revendications 1 à 7, caractérisé en ce qu'il est prévu un dispositif de verrouillage, qui permet d'éviter ou d'empêcher un déplacement relatif entre le dispositif de retenue (14) et l'élément de guidage (12, 13).

9. Dispositif d'attelage selon la revendication 8, caractérisé en ce que sur le dispositif de retenue (14) est prévu un verrou (59) qui peut être déplacé entre deux positions d'extrémité et qui, dans sa première position ressortie, s'engage dans ou entre des maillons individuels (66) de la chaîne (44) et, dans sa seconde position rétractée, n'engrène pas avec les maillons (66) de la chaîne (44).

10. Dispositif d'attelage selon l'une des revendications 1 à 9, caractérisé en ce que sur le au moins un galet (36) sont prévus des moyens, sur lesquels peut être monté un élément de manivelle (38), qui peut être entraîné manuellement ou à l'aide d'un moteur.
